# DEMANDE DE BREVET EUROPEEN

(11) **EP 0 538 111 A1**
(43) Date de publication de la demande: **21.04.1993**
(21) Numéro de dépôt: 92402783.2
(22) Date de dépôt: 12.10.1992
(51) Int. Cl.: G06F 15/72, G06F 15/70

(54) **Procédé de réalisation d'une image de référence synthétisée pour le contrôle d'objets , et son dispositif de mise en oeuvre**

(30) Priorité: 14.10.1991 FR 9112617
(71) Demandeur: COMMISSARIAT A L'ENERGIE ATOMIQUE, F-75015 Paris (FR)
(72) Inventeur: Darboux, Michel, F-38000 Grenoble (FR); Lionti, Rosolino, F-38180 Seyssins (FR)
(74) Mandataire: Dubois-Chabert, Guy

(57) **Abrégé**

Ce procédé consiste à élaborer une première image binaire (104), à partir des données descriptives d'un circuit intégré (ou autre type d'objet) à inspecter, ces données étant mémorisées dans une base de données (102). Des images réelles des éléments caractéristiques du circuit intégré à inspecter sont alors acquises (200) et traitées de façon à pouvoir être appliquées (300) sur l'image binaire, en fonction de leurs positions associées. Une image de synthèse ainsi obtenue est considérée comme une image de référence à laquelle sont comparées les images des circuits à inspecter.

Ce procédé peut s'appliquer à de nombreux types d'objets fabriqués industriellement et nécessitant une inspection très précise.

## Description

La présente invention concerne un procédé et son dispositif de mise en oeuvre permettant de réaliser une image de synthèse utilisée, lors de la comparaison d'images, comme image de référence.

Un tel procédé trouve de nombreuses applications dans le domaine de l'inspection industrielle où l'on cherche à contrôler un objet par comparaison de l'image dudit objet avec l'image de référence synthétisée.

De façon plus particulière, cette invention peut être appliquée à la vérification de circuits intégrés fabriqués à partir d'une chaîne de fabrication industrielle.

Il est connu de détecter les défauts éventuels des objets industriels, et plus particulièrement des circuits intégrés, en utilisant des procédés de comparaison implantés dans des machines de vision. Dans ces procédés, une des images est issue de la réalité et représente l'objet à inspecter, tandis que l'autre image correspond à un objet parfait exempt de défaut. Dans certaines applications connues, cette image de référence représentant un objet parfait, est construite à partir d'informations issues d'une base de données de conception (base de données C.A.O.). Il s'agit alors d'une image de synthèse. Cependant, l'image binaire de conception ainsi obtenue à partir des données de conception, n'est pas toujours suffisamment précise par rapport à la réalité, en particulier en ce qui concerne les arrondis, les courbures et les contrastes lumineux existant dans la réalité.

Afin de rendre ces images plus "réalistes", il est possible d'effectuer un procédé basé sur un filtrage de l'image de conception obtenue à partir des données de C.A.O. (Conception Assistée par Ordinateur). Ce filtrage permet, notamment, d'arrondir les angles pour rendre ladite image plus réaliste et plus proche de l'image de l'objet à contrôler.

Un tel procédé est décrit dans l'article "Advanced 5X reticle inspection technologies for U.L.S.I. devices", écrit par Mrs TAKEUCHI, JOSEPH, YOSHIDA, MORIIZUMI, PARKER et WATAKABE et publié en 1990 dans la revue S.P.I.E., vol. n° 1 261.

Un procédé de génération d'une scène graphique nouvelle par remplacement de certains motifs graphiques est décrit dans le document EP-A-0 354 031, déposé le 3 août 1989, par XEROX CORPORATION. Ce procédé consiste à effectuer une première étape de choix des motifs graphiques qui devront être recherchés ; il consiste ensuite à effectuer une seconde étape de recherche, dans la scène graphique, de toutes les occurrences des motifs graphiques choisis précédemment ; ce procédé consiste enfin en une troisième étape de remplacement, dans la scène graphique, de ces motifs graphiques par d'autres motifs provenant généralement d'une bibliothèque.

Un tel procédé ne peut être appliqué à la génération d'images destinées à servir de référence lors d'une inspection par comparaison d'objets tels que les circuits intégrés. En effet, la comparaison de telles images avec des images de scènes réelles n'est pas suffisamment précise pour détecter les très petits défauts des objets à inspecter. Le procédé décrit précédemment ne permet donc pas de générer une image de référence suffisamment proche d'une image réelle pour ne présenter aucune discontinuité, notamment, dans les variations de niveaux de gris de l'image.

La présente invention a pour but de remédier à cet inconvénient. En effet, elle propose un procédé permettant de remplacer, sur une image binaire obtenue par transformation de données de conception issues d'une base de données C.A.O., les motifs graphiques (représentant les éléments caractéristiques de l'objet) par des images réelles desdits éléments caractéristiques.

Pour réaliser un tel remplacement des motifs graphiques par des images réelles, le procédé propose de réaliser un changement de maille consistant à effectuer le passage des éléments caractéristiques en maille caméra à des éléments caractéristiques en maille CAO. Il propose en outre un centrage précis des éléments caractéristiques permettant d'assurer une continuité de l'image de référence, notamment dans les variations de niveaux de gris.

De façon plus précise, la présente invention concerne un procédé de réalisation d'une image de référence synthétisée à partir de moyens de traitement d'images et de moyens de prise de vue, caractérisé en ce qu'il consiste à effectuer, à partir d'informations descriptives d'un objet à inspecter, les opérations suivantes :
(a) détermination d'éléments caractéristiques de l'objet à inspecter ;
(b) détermination d'informations de position desdits éléments caractéristiques dans les informations descriptives, à partir des moyens de traitement d'images ;
(c) acquisition, par les moyens de prise de vues, d'au moins une image réelle d'un champ de l'objet à inspecter, cette image réelle comportant au moins l'image réelle d'un élément caractéristique ;
(d) repositionnement, par les moyens de traitement d'images, des images réelles des éléments caractéristiques en fonction des informations de position déterminées en (b), l'image obtenue constituant l'image de référence.

Cette image est alors apte à être comparée aux images réelles des objets à inspecter.

Avantageusement, l'opération (c) consiste à :
- déplacer un champ d'observation sur l'objet ;
- déterminer lesdits champs contenant les éléments caractéristiques déterminés en (a) ;
- effectuer l'acquisition des images réelles de ces champs.

De plus, le procédé consiste à effectuer ultérieurement à l'opération (d), une opération (e) de mémorisation de l'image de référence.

Les informations descriptives sont, de préférence, exploitées sous forme d'une image binaire afin de faciliter les traitements, en particulier les traitements effectués lors des opérations (a) et (b).

De plus, l'opération (d) consiste avantageusement à remplacer, pour chaque information de position, les éléments caractéristiques représentés sur l'image binaire par les images réelles des éléments caractéristiques correspondants.

Selon un autre mode de réalisation de l'invention, le repositionnement pourrait être aussi effectué directement sur une image exempte d'information (c'est-à-dire un tableau vide).

De façon avantageuse, le procédé comprend en outre une opération de rééchantillonnage des images réelles des éléments caractéristiques obtenues en (c).

De façon plus précise, ce rééchantillonnage comprend une opération de calcul de centrage sur les images réelles des éléments caractéristiques. Il comprend en outre une opération de calcul d'un écart de largeur entre l'élément caractéristique représenté sur l'image binaire et son image réelle correspondante.

Selon l'invention, l'opération (b) comporte une sous-opération d'établissement d'une liste dans laquelle les éléments caractéristiques sont associés respectivement à leurs positions.

D'autres caractéristiques et avantages ressortiront mieux de la description qui va suivre donnée, à titre illustratif et non limitatif, en référence aux dessins dans lesquels :
- la figure 1 est une représentation schématique du cheminement des données à travers le dispositif de mise en oeuvre du procédé selon l'invention ;
- la figure 2 est un diagramme fonctionnel représentant les étapes du procédé selon l'invention ;
- la figure 3 est une représentation d'éléments caractéristiques recherchés dans l'image binaire lors de l'opération (b) ;
- la figure 4 est une représentation du positionnement d'éléments caractéristiques tels que des transitions et des coins lors de l'opération (d) de repositionnement ;
- la figure 5 est un diagramme fonctionnel représentant les différentes étapes de ladite opération (d) ;
- la figure 6 est une représentation schématique d'un dispositif mettant en oeuvre le procédé représenté sur la figure 2 ;
- la figure 7 est un exemple de réalisation d'une image synthétisée selon ledit procédé.

Dans toute la description qui va suivre, on prendra, comme exemple de réalisation de l'invention, l'application à la vérification de circuits intégrés sur tranches ("wafer", en anglais). Ainsi, les objets à inspecter seront, selon cette réalisation, lesdits circuits intégrés.

On parlera essentiellement, dans la description qui va suivre, des circuits intégrés, étant entendu qu'il peut s'agir d'autres objets industriels ou simplement de portions de circuits intégrés. En effet, le procédé peut être réalisé pour une portion de circuit intégré et répété autant de fois qu'il y a de portions (appelées aussi champs) à inspecter dans le circuit intégré à inspecter.

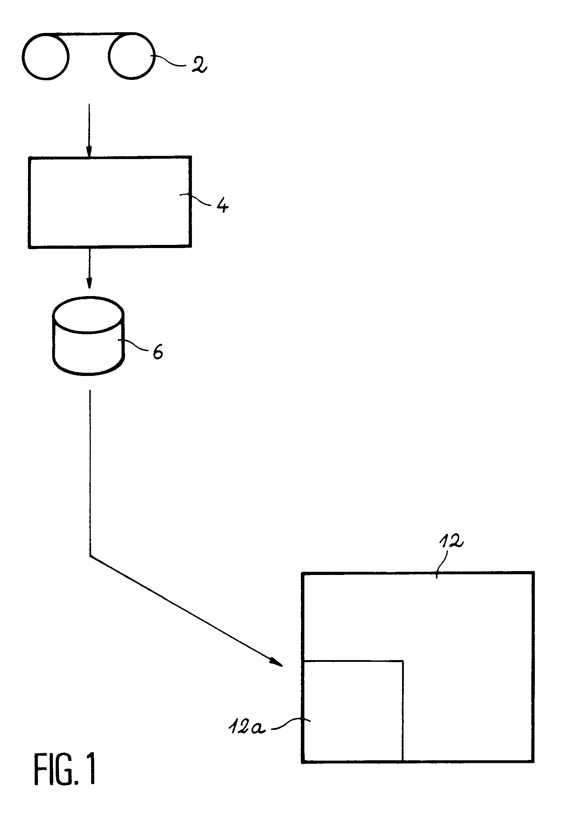

Sur la figure 1, on a représenté, de façon très schématique, le cheminement suivi par les données lors de l'application du procédé selon l'invention.

En effet, les données descriptives du circuit intégré à inspecter sont mémorisées dans des moyens 2 de mémorisation d'informations, tels qu'une bande magnétique ou une cassette. Ces données descriptives sont des données C.A.O. (Conception Assistée par Ordinateur), c'est-à-dire des données enregistrées sous une forme compacte optimisant le volume nécessaire à leur stockage (mémorisation).

Ces données C.A.O. sont transmises à un calculateur 4 qui effectue les opérations (a) et (b) décrites plus en détail ultérieurement. Ce calculateur 4 permet en particulier de déterminer les positions des éléments caractéristiques du circuit intégré. Les éléments caractéristiques d'un circuit intégré sont, par exemple, un ou plusieurs pixels représentatifs du niveau de gris du fond du circuit (appelés zones uniformes d'un premier type), un ou plusieurs pixels représentatifs du niveau de gris des motifs du circuit (appelé zone uniforme d'un deuxième type), des coins de motifs, des transitions (c'est-à-dire des éléments de la bordure entre le fond et le motif), des éléments particuliers tels que des cellules mémoire, des trous de contact, etc. Les pixels représentatifs des niveaux de gris correspondent aux éléments images des images réelles. Le calculateur 4 établit des listes dans lesquelles un élément caractéristique représenté généralement par un code est associé à une position. Lorsque cet élément caractéristique est plusieurs fois présent dans le circuit intégré, il est également présent plusieurs fois dans la liste, dans laquelle il est associé à chacune de ses positions. Ces listes sont enregistrées sur un disque dur 6 auquel le calculateur 4 peut accéder à tout moment.

Ces données contenues dans la liste sont transférées vers un système 12 d'inspection comportant une unité 12a de traitement rapide d'images (U.T.R.I.). Ce système 12 d'inspection permet d'effectuer les opérations (c) à (e) du procédé selon l'invention, procédé qui va être décrit ci-après.

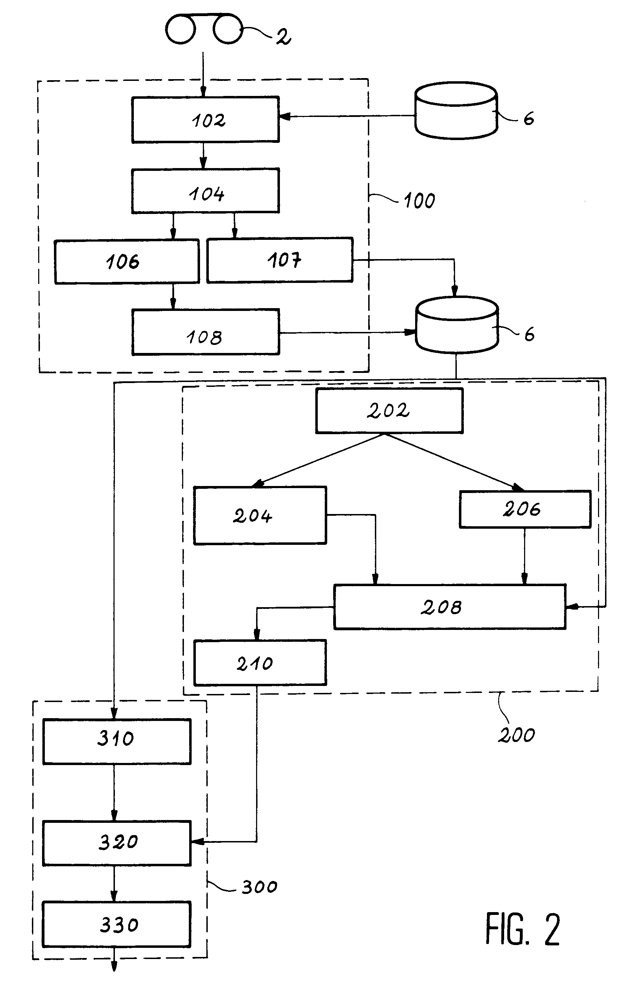

Sur la figure 2, on a représenté le diagramme fonctionnel décrivant les différentes opérations effectuées lors de la mise en oeuvre du procédé selon l'invention.

Ce procédé de réalisation d'une image de référence synthétisée peut être décomposé en trois phases de traitement des données d'images :
- une phase de prétraitement des données de C.A.O., représentée par le bloc 100 ;
- une phase d'apprentissage des éléments caractéristiques, représentée par le bloc 200 ;
- une phase de synthèse, représentée par le bloc 300.

De façon plus précise, la phase 100 de prétraitement des données de C.A.O. consiste essentiellement à traduire les données de C.A.O. en des données d'images binaires. En effet, les données de C.A.O. sont des données "compactes", c'est-à-dire, notamment, que chaque élément de la base de données C.A.O. n'est décrit qu'une seule fois dans ladite base de données, quel que soit le nombre de fois où il est présent dans le circuit intégré. Ces données de C.A.O. sont donc retraduites sous forme d'une image binaire, où les éléments apparaissent autant de fois qu'ils apparaissent sur le circuit intégré. Cette image binaire a l'avantage de représenter entièrement, sur un écran de visualisation, le circuit intégré.

Ainsi, la phase 100 de prétraitement comprend une première étape 102 d'enregistrement, dans la base de données C.A.O., des informations descriptives du circuit contenues dans une mémoire de masse telle qu'une bande magnétique 2 et des éventuelles informations déjà connues et stockées par exemple dans le disque dur 6.

Ces données C.A.O. sont avantageusement retraduites, c'est-à-dire transformées, dans le bloc 104, sous forme d'une image binaire afin de faciliter les traitements ultérieurs. La résolution d'image de cette image binaire, obtenue en 104, est la même que celle de la base de données de C.A.O. En effet, pour limiter la perte d'informations pouvant survenir lors de ce genre de transformation, on synthétise ladite image binaire dans la maille C.A.O. correspondant au système de description du circuit intégré.

On comprendra par maille C.A.O., les pas d'échantillonnage respectifs selon les deux directions du plan contenant l'image. Cette maille C.A.O. peut être par exemple égale à 0,1 µm x 0,1 µm ou, à 0,05 µm x 0,0 5 µm, lorsque le circuit intégré est très dense, c'est-à-dire lorsqu'il comporte de nombreux éléments caractéristiques.

L'étape suivante, représentée par le bloc 106, consiste à déterminer les éléments caractéristiques du circuit intégré à inspecter. L'étape 107, éventuelle, consiste à mesurer la largeur théorique d'un motif particulier choisi de façon quelconque dans l'image binaire. Cette mesure, comparée ultérieurement à la largeur réelle d'un motif du même type, permettra comme on le verra par la suite de déterminer l'écart entre ces deux valeurs.

Il s'agit dans l'étape 106 d'une observation, par exemple par un utilisateur, des différents éléments caractéristiques tels que motifs, parties de motifs ou groupe de motifs, présents sur le circuit intégré. A partir de cette observation visuelle, on définit les éléments caractéristiques respectivement sous forme de masque binaire et on extrait, de l'image binaire, des informations relatives à la position desdits éléments caractéristiques ainsi codés.

Cette détection de position des éléments caractéristiques a lieu sur l'image binaire théorique obtenue en 104, totalement exempte de bruit. Elle consiste donc en un simple décodage des configurations correspondant auxdits éléments caractéristiques. Ainsi, l'image binaire est balayée en utilisant une fenêtre, de quelques pixels de côtés. Le contenu de la fenêtre est corrélé avec les éléments caractéristiques codés sous forme de masques. Le contenu de la fenêtre correspond à l'un des éléments caractéristiques recherchés.

La fenêtre présente généralement la même taille que le masque de l'élément caractéristique en cours de recherche.

On crée ainsi, dans le bloc 106, une image de types, c'est-à-dire une image représentative de la position des éléments caractéristiques types dans l'image binaire (par exemple des codes répartis dans un tableau). Ces informations de position sont obtenues avec une précision égale à la résolution de la base de données de conception, cette résolution étant généralement supérieure à la résolution d'une image réelle, pour laquelle ladite résolution est donnée par la taille des pixels de la caméra utilisée pour l'acquisition de ladite image réelle. On effectue donc cette détection avec une précision subpixel dans la maille de la caméra.

Le bloc 108 de la figure 2 représente l'étape de compression des données dans laquelle une liste des types est établie. Cette liste contient les éléments caractéristiques et leurs positions associées.

Cette liste ainsi que la largeur théorique d'un motif sont mémorisées par exemple dans le disque dur 6, duquel les informations contenues dans ladite liste, seront retirées au moment de la phase 300 de synthèse.

Le codage de l'image de types sous forme d'une liste permet de condenser les informations contenues dans ladite image de types et donc de réduire le volume des données à stocker durant la phase de prétraitement. Cette condensation des informations permet, avantageusement, de réduire le temps de transfert desdites informations.

Dans un autre mode de réalisation, cette liste peut être obtenue directement après l'étape 104 de détection de position des éléments caractéristiques ; le passage par une image de type n'est pas obligatoire et dépend du choix des traitements utilisés pour obtenir la liste type à partir de l'étape 104.

La phase d'apprentissage est représentée, sur la figure 2, par le bloc 200. Cette phase concerne l'acquisition des images réelles des éléments caractéristiques.

D'une façon générale, lorsque l'image réelle du circuit intégré (ou d'une partie du circuit intégré) est acquise, l'utilisateur y prélève des portions d'images correspondant aux éléments caractéristiques. Ces portions d'images peuvent être des pixels individuels ou groupés, des portions de lignes, des portions de colonnes, etc.

Ces portions d'images sont choisies exemptes de défauts. Pour cela, l'utilisateur sélectionne le circuit à utiliser pour cette phase, au moyen, par exemple, d'un microscope. C'est également cet utilisateur qui choisit, sur ce circuit les portions de l'image utilisées dans la suite du traitement afin que celles-ci permettent la réalisation d'une image de référence pour tous les circuits à inspecter comportant des éléments du même type.

De façon plus précise, l'acquisition de l'image réelle est effectuée lors d'une étape 202. La résolution de cette image réelle est identique à la résolution du capteur d'images (ou caméra). L'étape de prélèvement des échantillons, qui suit l'étape 202, comporte une étape 204 et éventuellement une étape 206 respectivement de prélèvement des échantillons réels des éléments caractéristiques et de mesure de largeur réelle du motif défini précédemment à l'étape 107.

Les motifs du circuit intégré peuvent être surgravés ou sousgravés. En effet, pour réaliser les circuits intégrés, on applique des procédés de microlithographie qui peuvent connaître des fluctuations de la taille des motifs. Ces fluctuations sont dûes à la gravure. Un motif trop gravé sera plus petit que la taille de référence du motif correspondant dans l'image binaire. Un motif pas assez gravé sera plus grand que ladite taille de référence.

Aussi, la comparaison entre la largeur réelle du motif, déterminée à l'étape 206, et la largeur théorique de ce motif, déterminée à l'étape 107 et stocké dans le disque 6, permet d'avoir l'écart (ou offset) entre ces deux valeurs. Cette étape de comparaison est réalisée à l'étape 208 décrite ultérieurement.

Pour effectuer l'étape 204 de prélèvement des échantillons des éléments caractéristiques, l'utilisateur utilise par exemple le système d'inspection dans un mode semi-automatique. Ce système d'inspection permet audit utilisateur de déplacer un champ d'observation sur la surface du circuit intégré. Il analyse ainsi la constitution dudit circuit afin de choisir les éléments caractéristiques qui sont le mieux adaptés. Autrement dit, il recherche un champ du circuit exempt de défaut et contenant les éléments caractéristiques choisis. L'image réelle de ce champ est alors acquise et nommée "image d'apprentissage".

A titre d'exemple d'apprentissage, lorsque le circuit intégré à inspecter n'est pas très dense et qu'il comporte des motifs très variés, l'opération de prélèvement des échantillons concerne les coins et les transitions pris individuellement. Au contraire, lorsque le circuit intégré est dense, l'utilisateur prélève des échantillons de taille plus importante, tels que des motifs complets, par exemple, des cellules mémoires ou des trous de contact. En effet, chaque trou de contact est composé de quatre coins et de quatre transitions, mais ces transitions et coins sont très petits et proches les uns des autres, ce qui nécessite un traitement proche de la limite de résolution. Il est donc préférable, dans un tel cas de circuit intégré très dense, de prélever des échantillons de taille plus importante.

De plus, dans certains cas, il est difficile de déterminer un champ unique contenant tous les éléments caractéristiques exempts de défauts. Selon l'invention, il est possible de choisir plusieurs champs, c'est-à-dire plusieurs images d'apprentissage, qui seront traitées l'une à la suite de l'autre.

Des échantillons réels d'éléments caractéristiques (coins, transitions, ... ) sont ainsi prélevés de cette image d'apprentissage.

Par ailleurs, ces échantillons n'ont généralement pas une place précise dans l'image d'apprentissage, car la caméra permettant l'acquisition des images n'a pas de position fixe, c'est-à-dire de position déterminée par rapport au circuit intégré. Ainsi, les coins et transitions, entre autres, sont dans une position quelconque par rapport à la maille de la caméra.

Une opération 208 de rééchantillonnage est alors introduite dans la phase 200 d'apprentissage. Ce rééchantillonnage permet de décaler les échantillons en tenant compte du calcul de centrage effectué sur les échantillons réels des transitions et coins, ainsi que de la mesure de l'écart de sur ou sous-gravure effectuée lors de cette même étape. Pour cela, ce calcul de centrage consiste à déterminer l'écart -entre la position quelconque des éléments caractéristiques et une position déterminée dite centrée, dans la maille du capteur. Cet écart est alors additionné de manière algébrique à l'offset de sur ou sousgravure.

Les échantillons des éléments caractéristiques sont alors déplacés de cet écart total par une première étape de rééchantillonnage. De plus, l'opération 208 effectue le passage des échantillons en maille caméra à des échantillons en maille C.A.O. par un deuxième rééchantillonnage.

Ces rééchantillonnages peuvent être effectués, en une ou plusieurs étapes, selon plusieurs procédés connus, tels qu'une interpolation linéaire.

Lorsque ce rééchantillonnage 208 a été effectué, on obtient en 210 des échantillons réels dans la maille C.A.O., c'est-à-dire avec une résolution identique à celle des informations contenues dans la base de données C.A.O.

Les images réelles des éléments caractéristiques sont alors avantageusement enregistrées dans une bibliothèque, telle qu'une mémoire de masse qui peut être le disque 6, la mémoire du système 12 décrit précédemment ou la mémoire d'une carte décrite ultérieurement. Lesdites images peuvent être recherchées dans cette bibliothèque et utilisées lors de la synthèse d'une image, de référence. Lors d'une mise à jour d'une image de référence après variations d'aspect du circuit correspondant à ladite image, les images réelles enregistrées sont remplacées par celles prélevées sur le nouveau circuit.

Les images réelles des éléments caractéristiques seront prélevées directement ou dans la bibliothèque au moment de l'application de la phase 300 de synthèse.

La phase 300 de synthèse consiste à remplacer dans l'image en cours de synthèse, c'est-à-dire dans l'image de types, les valeurs des pixels par des nouvelles valeurs correspondant à celles des échantillons réels des éléments caractéristiques provenant de la phase 200 d'apprentissage. Cette opération de remplacement par les échantillons réels est effectuée pour chacune des positions détectées en phase 100 de prétraitement.

De façon plus précise, l'étape 310 de récupération de la liste de types consiste à rechercher, dans le disque dur 6, les informations contenues dans ladite liste : on effectue une décompression des données (à savoir une opération inverse de celle qui consiste à transformer l'image de types en liste de types) afin de retrouver l'image de types sur laquelle on applique, dans une opération 320, les échantillons réels déterminés en 210.

Cette opération 320 d'application consiste, par une méthode substitutive, à coller les échantillons pris dans l'image d'apprentissage sur les pixels identifiés lors de l'opération 106 de détermination des éléments caractéristiques. A l'issue de cette opération 320, on obtient une image synthétisée comportant des niveaux de gris, comme une image réelle. Cette image synthétisée est développée dans une maille C.A.O. Une dernière opération 330 de rééchantillonnage permet de modifier cette dernière image en une image synthétisée dans la maille du capteur (à savoir, la caméra de prise de vues). Ce dernier rééchantillonnage peut consister, selon un mode de réalisation, en une interpolation linéaire.

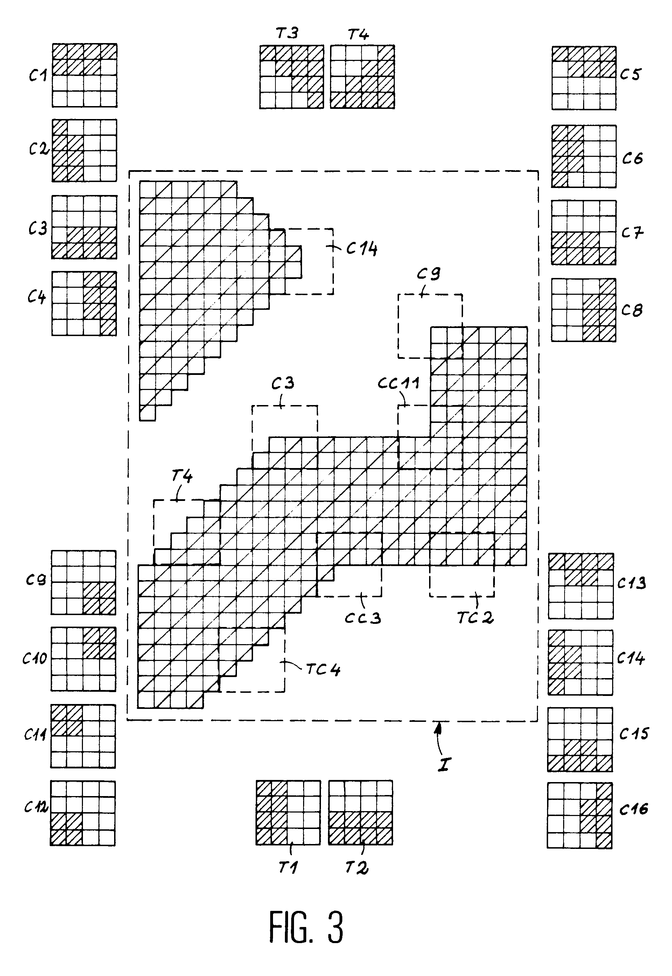

Sur la figure 3, on a représenté un exemple des différents motifs recherchés lors de l'opération 106 de détection de positions. Cette opération 106 consiste à identifier, sur l'image binaire obtenue en 104, les lieux d'application des échantillons réels obtenus en 210. Cette détection consiste en un décodage des configurations correspondant aux transitions et aux coins.

Il existe généralement trente deux types de coins dont seize sont représentés par les matrices C1 à C16 sur la figure 3, les seize autres matrices (non représentées) étant les coins complémentaires desdites matrices C1 à C16. On entend par coins complémentaires, les matrices de coins dans lesquelles les zones claires des coins représentés sur la figure 3 sont des zones grisées lorsqu'il s'agit de coins complémentaires, et inversement.

Il existe de plus huit configurations de transitions :
- une transition T1 verticale et sa complémentaire, non représentée ;
- une transition T2 horizontale et sa complémentaire TC2, représentée dans l'exemple d'image I binaire ;
- une transition T3 descendante (pente de 135°) et sa complémentaire ;
- une transition T4 montante (pente de 45°) et sa complémentaire TC4.

Dans la zone pointillée I, on a représenté, en exemple, une image binaire dans laquelle on recherche les différents coins et transitions. Sur cette image binaire, on peut repérer les coins C14, C9 et C3, les coins CC11 et CC3 complémentaires des coins respectifs C11 et C3. On peut également repérer la transition T4 et les transitions TC4 et TC2 complémentaires des transitions respectives T4 et T2.

Selon un mode de réalisation de l'invention, il est possible de limiter le nombre des transitions et coins prélevés lors de l'apprentissage, en utilisant les symétries axiales qui transforment, par exemple, un coin C10 et un coin C11.

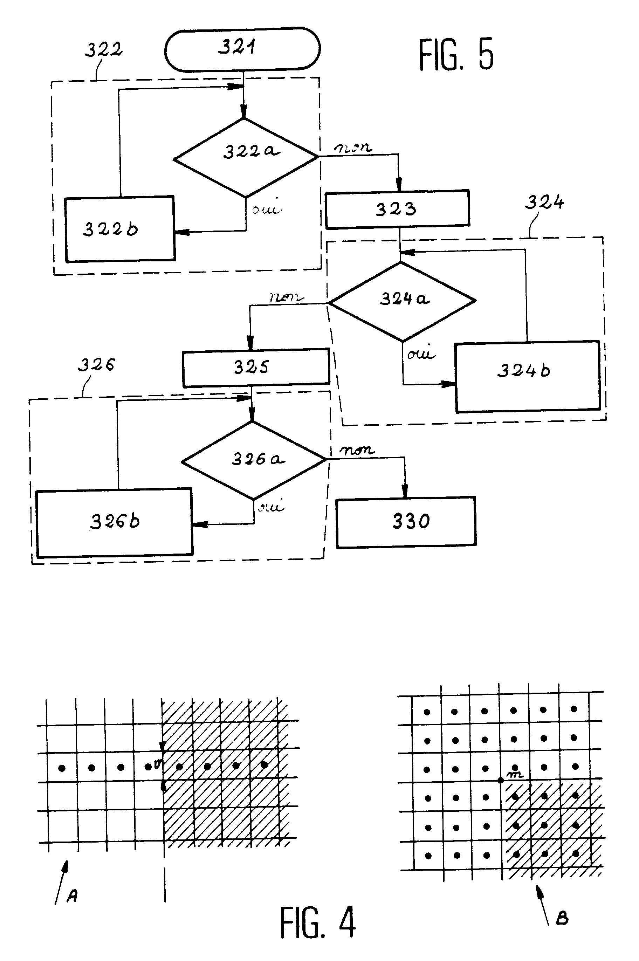

Sur la figure 4, on a représenté une transition sous forme de vecteur de transition et un coin, sous forme de matrice de coin lors du "collage" 320 (nommé aussi application) des échantillons réels, prélevés et centrés durant la phase 200 d'apprentissage, sur l'image binaire. Ces vecteurs et matrices sont avantageusement pris respectivement de longueur et de côtés pairs, de façon à repérer aisément le centre dudit vecteur et de ladite matrice.

La zone A de la figure 4 montre un vecteur de centre v, positionné de façon à ce que son centre v corresponde à la transition de l'image binaire.

La zone B de la figure 4 montre une matrice de centre m positionnée de façon à ce que son centre m corresponde au coin de la matrice binaire.

Sur la figure 5, on a représenté un exemple de diagramme fonctionnel de l'opération 320 d'application des échantillons réels (dans le cas où ils sont constitués par des zones uniformes, des transitions et des coins), dans laquelle on cherche à coller les échantillons réels, prélevés dans la phase 200 d'apprentissage, sur les pixels identifiés lors de la phase 106 de détection de types.

Cette opération 320 comporte trois étapes :
- application des zones uniformes (deux types de zones uniformes : un premier type PF et un second type PM) contenues dans la liste de types : chargement en 321 de cette liste. Une boucle 322 de traitement permet de lire par le test 322a toutes les zones de la liste et de les remplacer en 322b par les échantillons réels correspondants. Les éléments de la liste autres que ces zones sont alors transférés en 323 ;
- application des transitions contenues dans la liste de types, la liste des transitions est recherchée dans 323 et exploitée. Pour cela une boucle 324 permet un fonctionnement identique à la boucle 322 pour la lecture par le test 324a et l'application en 324b des transitions. Les éléments de la liste de types autres que les zones uniformes et les transitions sont alors transférés en 325 ;
- application des coins contenus dans la liste de types. Une troisième boucle 326 permet la lecture par le test 326a des coins contenus dans 325 et l'application en 326b de tous les coins sur l'image. Lorsque la liste des coins a été entièrement lue en 326a, l'opération 330 de rééchantillonnage est entreprise pour permettre l'obtention de l'image de référence synthétisée.

En effet, à l'issue de chacune des boucles 322, 324 et 326, une image est obtenue dans la maille C.A.O. L'image binaire est transformée en image de zones uniformes dans la maille C.A.O. après application de la boucle 322. Cette image est transformée en image de zones uniformes et transitions dans la maille C.A.O. à l'issue de la boucle 324, elle-même transformée en image de zones uniformes, transitions et coins, dans la maille C.A.O., après application de la boucle de traitement 326. Enfin, un rééchantillonnage 330, décrit précédemment, permet l'obtention de l'image synthétisée dans la maille du capteur.

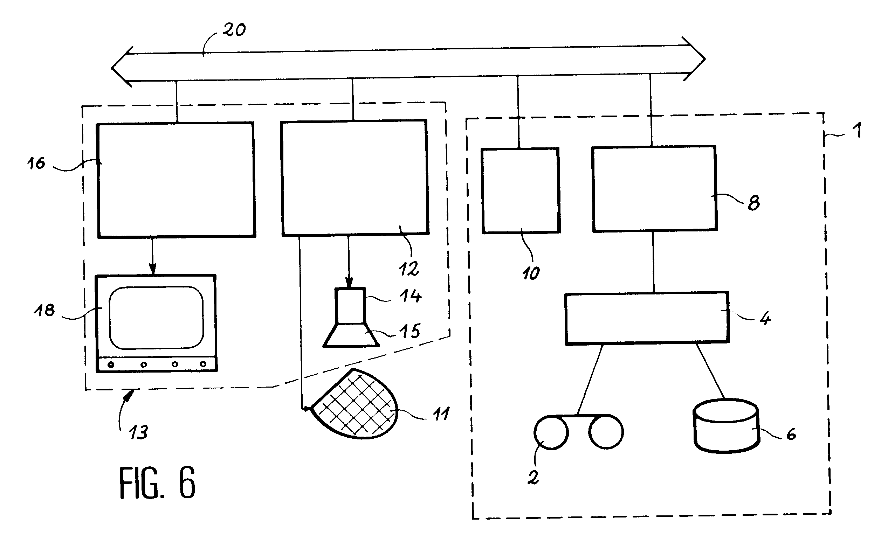

Sur la figure 6, on a représenté un exemple de dispositif mettant en oeuvre le procédé selon l'invention. Ce dispositif comprend des moyens 1 de traitement d'images, et des moyens de prise de vues tels qu'une machine 13 d'inspection interactive du circuit intégré 11.

Ce circuit intégré 11 à inspecter est disposé sur une table mécanique non représentée sur la figure.

La machine 13 d'inspection comprend un sous-système 12 d'inspection, une caméra 14 CCD (à transfert de charge) associée à un microscope 15, une carte 16 de visualisation d'images et une unité 18 permettant à l'utilisateur de visualiser les images et d'effectuer ses choix (de champs d'images, par exemple). Cette machine permet ainsi l'acquisition et la comparaison d'images.

Les moyens 1 de traitement comprennent un calculateur 4 équipé d'un disque dur 6, d'un lecteur 2 de bandes magnétiques (ou, selon le mode de réalisation choisi, un lecteur de cassettes) et d'un coupleur 8 assurant le couplage entre le calculateur 4 et l'unité de traitement rapide d'images (U.T.R.I.) du sous-système 12 d'inspection via un bus 20.

Ces moyens 1 de traitement comprennent également une carte 10 C.P.U. (unité de traitement centrale).

Selon un mode de réalisation du dispositif selon l'invention, la carte 10 C.P.U. et le calculateur 4 sont dissociés car ledit calculateur peut être directement intégré dans la centrale de calculs de l'usine fabriquant les circuits intégrés à inspecter.

Le bus 20 de données assure la transmission des informations entre les moyens 1 de traitements d'images et la machine 13 d'inspection. De façon plus précise, la carte 16 de visualisation, le sous-système 12 d'inspection, la carte 10 C.P.U. et le coupleur 8 sont connectés sur ledit bus 20.

Les opérations 102 à 108, effectuées durant la phase 100 de prétraitement, sont traitées par le calculateur 4.

Les opérations suivantes qui constituent la phase 200 d'apprentissage sont effectuées à partir de l'unité 18 de visualisation, de la caméra 14 et du sous-système 12 d'inspection qui gère notamment les déplacements relatifs entre le circuit intégré 11 et la caméra 14, ainsi que l'acquisition des images réelles dudit circuit intégré. Les images des éléments caractéristiques du circuit 11, c'est-à-dire les échantillons réels obtenus, sont stockés dans la mémoire de carte 10 C.P.U. où ils sont recherchés au moment de l'opération 320 d'application.

Durant la phase 300 de synthèse, la liste de types mémorisée dans le disque dur 6 est transférée vers la mémoire de la carte 10 C.P.U. Le processeur de ladite carte 10 effectue les opérations 320 d'application des éléments caractéristiques.

L'image synthétisée ainsi obtenue est transférée vers le sous-système 12 d'inspection où elle est utilisée comme image de référence lors de comparaisons avec les images de circuits intégrés à inspecter.

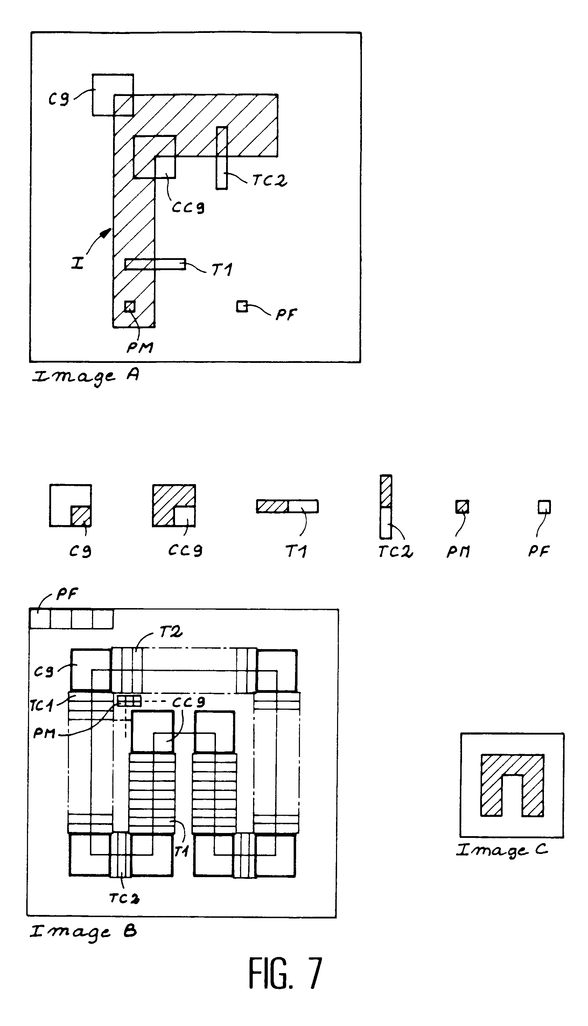

Afin de permettre une meilleure compréhension du procédé décrit dans les pages précédentes de cette description, on a représenté sur la figure 7 un exemple de mise en oeuvre du procédé selon l'invention.

Sur l'image A de la figure 7, on a représenté une image d'apprentissage avec ses éléments caractéristiques, tels que le coin C9, le coin complémentaire CC9, la transition verticale T1, la transition horizontale complémentaire TC2, et les pixels du premier type de zone uniforme PF et du second type de zone uniforme PM.

Sur l'image B de la figure 7, on a représenté l'image obtenue au moment de l'application des échantillons réels sur l'image binaire, en fonction de la liste des positions obtenue dans la phase de prétraitement.

Sur l'image C de la figure 7, on a représenté l'image synthétisée obtenue, image qui sera considérée comme l'image de référence au moment de l'inspection des objets industrialisés.

Cet exemple de la figure 7 permet sans doute une meilleure compréhension du procédé selon l'invention. Ce n'est cependant qu'un exemple simple d'un circuit peu dense.

## Revendications

1. Procédé de réalisation d'une image de référence synthétisée à partir de moyens (1) de traitement d'images et de moyens de prise de vues (13), caractérisé en ce qu'il consiste à effectuer, à partir d'informations descriptives d'un objet à inspecter, les opérations suivantes :
(a) détermination (100) d'éléments caractéristiques de l'objet à inspecter ;
(b) détermination (100) d'informations de position desdits éléments caractéristiques dans les informations descriptives, à partir des moyens de traitement d'images ;
(c) acquisition (200), par les moyens de prise de vues, d'au moins une image réelle d'un champ de l'objet à inspecter, cette image réelle comportant au moins l'image réelle d'un élément caractéristique ;
(d) repositionnement (300), par les moyens de traitement d'images, des images réelles des éléments caractéristiques en fonction des informations de position déterminées en (b), l'image obtenue constituant l'image de référence.

2. Procédé selon la revendication 1, caractérisé en ce que l'opération (c) consiste à :
- déplacer un champ d'observation sur l'objet ;
- déterminer lesdits champs contenant les éléments caractéristiques déterminés en (a) ;
- effectuer l'acquisition des images réelles de ces champs.

3. Procédé selon la revendication 1 ou 2, caractérisé en ce qu'il consiste en outre à effectuer, ultérieurement à l'opération (d), une opération (e) de mémorisation de l'image de référence.

4. Procédé selon l'une quelconque des revendications 1 à 3, caractérisé en ce qu'il consiste tout d'abord, à partir des informations descriptives, à construire une image binaire.

5. Procédé selon l'une quelconque des revendications 1 à 4, caractérisé en ce que l'opération (d) consiste à remplacer, pour chaque information de position, les éléments caractéristiques représentés sur l'image binaire par les images réelles des éléments caractéristiques correspondants.

6. Procédé selon l'une quelconque des revendications 1 à 5, caractérisé en ce qu'il comprend en outre une opération (208) de rééchantillonnage des images réelles des éléments caractéristiques obtenues en (c).

7. Procédé selon la revendication 6, caractérisé en ce que l'opération de rééchantillonnage comprend une opération de calcul de centrage sur les images réelles des éléments caractéristiques.

8. Procédé selon la revendication 6 ou 7, caractérisé en ce que l'opération de rééchantillonnage comprend une opération de calcul d'un écart de largeur entre l'élément caractéristique représenté sur l'image binaire et son image réelle correspondante.

9. Procédé selon l'une quelconque des revendications 6 à 8, caractérisé en ce que l'opération de rééchantillonnage comprend une opération de changement de maille pour transformer les images réelles des éléments caractéristiques de la maille des moyens de prise de vue à la maille des informations descriptives.

10. Procédé selon l'une quelconque des revendications 1 à 8, caractérisé en ce que l'opération (b) comporte une sous-opération (108) d'établissement d'une liste dans laquelle les éléments caractéristiques sont associés respectivement à leurs positions.
